# FASCICULE DE BREVET EUROPEEN

(11) **EP 0 574 315 B1**
(45) Date de publication et mention de la délivrance du brevet: **06.05.1998**
(21) Numéro de dépôt: 93401478.8
(22) Date de dépôt: 10.06.1993
(51) Int. Cl.: C03C 27/04, C03C 17/42, C09J 5/02, B60J 1/02, B60J 10/02

(54) **Procédé de traitement d'un vitrage et vitrage prêt à être monté par collage dans une baie**
Verfahren zur Behandlung einer Verglasung und Verglasung für die Einfassung in eine Öffnung
Process for the treatment of a glazing and glazing to be mounted in an opening by means of adhesives

(30) Priorité: 10.06.1992 FR 9206953
(43) Date de publication de la demande: 15.12.1993
(73) Titulaire: SAINT-GOBAIN VITRAGE, 92400 Courbevoie (FR)
(72) Inventeur: Beyrle, André, F-60170 Trancy-le-Val (FR); Armand, Philippe, F-75018 Paris (FR)
(74) Mandataire: Muller, René

(56) Documents cités:
- EP-A- 0 040 469
- EP-A- 0 332 344
- EP-A- 0 378 462
- EP-A- 0 487 377
- DE-A- 3 939 180
- US-A- 3 341 399
- US-A- 3 702 783

## Description

L'invention concerne un procédé de traitement d'un vitrage afin de le rendre prêt à être monté par collage dans une baie.

L'invention a trait notamment à l'adhésion d'un mastic, tel qu'un polyuréthane, sur le vitrage, permettant le collage de vitrages dans des baies de carrosserie de véhicules à moteur. Un tel montage des vitrages présente plusieurs avantages : en cas de choc violent, il permet un meilleur maintien du vitrage. De plus, il autorise un montage affleurant du vitrage à la carrosserie, ce qui réduit le coefficient de pénétration dans l'air du véhicule. Un autre avantage de ce type de montage est de pouvoir être automatisé.

Ce type de montage est tout à fait adapté aux vitrages encapsulés, c'est-à-dire aux vitrages munis d'un profil périphérique surmoulé (ou joint d'encapsulation) destiné notamment à remplacer le joint de finition.

Ce montage concerne également les vitrages sans profil de surmoulage et des vitrages munis d'un profil extrudé. Par souci de simplification, la suite de la description portera plus particulièrement sur les vitrages encapsulés.

Pour les vitrages encapsulés, le collage peut être réalisé de deux façons différentes. Une première méthode consiste à coller le mastic sur le verre ou sur une bordure émaillée en limite du profil surmoulé. Une seconde méthode consiste à coller le mastic sur le profil surmoulé.

L'invention porte sur la première méthode. Le but est de fournir un vitrage, plus particulièrement un vitrage encapsulé, prêt à être collé par l'intermédiaire d'un mastic au joint adhésif dans une baie de carrosserie.

Une telle technique est déjà utilisée, notamment dans l'industrie automobile. Elle consiste à déposer sur une surface émaillée, en limite du profit surmoulé, une précouche qui comporte des silanes puis un primaire d'adhésion. Il est alors possible de déposer un joint d'adhésion ou mastic qui permet de fixer le vitrage dans une baie de carrosserie de véhicule automobile.

Cette technique présente des inconvénients. En effet, le primaire ne reste réactif que quelques jours. Or, les industries qui réalisent le vitrage encapsulé sont différentes de celles qui le fixent dans la baie de carrosserie. Le traitement qui consiste à déposer la précouche et le primaire est généralement réalisé par le verrier et les vitrages sont stockés avant d'être montés sur les carrosseries. Ce stockage dure souvent plusieurs jours. Il est alors nécessaire pour pouvoir coller le mastic sur la face de verre émaillée de réactiver le primaire. Cette étape supplémentaire lors de la fixation du vitrage dans la baie de carrosserie est un handicap sur les chaînes de montage car d'une part, elle est difficilement automatisée et étant une étape supplémentaire, elle nuit à la productivité.

Par ailleurs, il est connu des documents européens EP-A1-0 487 377 et EP-A1-0 378 462 de réaliser le collage d'un vitrage dans une baie de carrosserie à l'aide d'un cordon de collage adhérant à un profil surmoulé sur le vitrage par l'intermédiaire d'une couche comportant des groupes OH libres.

Il est encore connu des documents DE-A1-39 39 180 et EP-A2-0 040 469 d'associer des silanes à des compositions polyuréthanes présentant des groupements NCO libres pour améliorer l'adhésion desdites compositions sur le verre.

L'invention a pour objet un procédé de traitement d'un vitrage, notamment d'un vitrage encapsulé prêt à être collé par l'intermédiaire d'un mastic dans une baie de carrosserie même après un stockage de plusieurs mois.

Il apparaît qu'un traitement qui conduit à des OH libres après polymérisation du primaire permet de procéder à l'adhésion même après un long stockage.

Selon l'invention, le problème posé par les primaires d'adhésion actuels, qu'il est nécessaire de réactiver est résolu par un procédé de traitement d'un vitrage, notamment d'un vitrage encapsulé qui consiste à traiter une partie de la surface du vitrage par au moins un silane et une composition susceptible de former après polymérisation au moins partielle une couche à groupes OH libres.

Lorsque le vitrage possède une zone émaillée par exemple en périphérie, le traitement est avantageusement effectué sur cette zone.

Dans un mode de réalisation selon l'invention, le traitement peut se faire en une seule étape. Pour cela, on introduit les silanes dans la composition qui après polymérisation partielle ou totale est susceptible de former une couche à groupes OH libres. Il est alors possible d'effectuer le traitement sans précouche.

Ce type d'adhésion étant sensible aux ultra-violets, il est préférable de la protéger de la lumière extérieure. Ainsi, suivant un mode préféré selon l'invention, on traite par la composition la zone émaillée en bordure du joint d'encapsulation.

La polymérisation peut être réalisée par un traitement thermique à température élevée et de courte durée, par exemple à une température d'environ 80 à 120°C pendant une durée de l'ordre de une à quelques minutes.

La polymérisation peut aussi être réalisée à la température dite ambiante, c'est-à-dire d'environ 20 à 25°C mais pendant une durée beaucoup plus longue, par exemple 24 heures.

Entre ces deux types de polymérisation, il est possible d'envisager tout autre cycle de polymérisation thermique. L'avantage d'une polymérisation rapide réside essentiellement dans une plus grande facilité de manipulation d'un vitrage traité. On peut aussi utiliser le cas échéant d'autres types de polymérisation, par exemple par microondes, par catalyse en phase vapeur, par rayonnement, etc...

L'invention concerne également un vitrage, notamment un vitrage encapsulé, susceptible d'être collé dans une baie de carrosserie d'un véhicule automobile, même après une longue période de stockage. Ce vitrage est traité selon le procédé décrit précédemment.

Les inventeurs proposent un vitrage, notamment un vitrage encapsulé, possédant notamment une surface émaillée sur sa périphérie, destiné à être collé dans une baie d'un véhicule automobile et qui présente sur sa surface, notamment émaillée des groupes OH libres susceptibles de réagir ultérieurement avec un cordon adhésif.

Les vitrages ainsi obtenus permettent donc d'être stockés avant leur montage sur le véhicule.

Une fois le collage effectué, les vitrages ainsi fixés répondent tout à fait aux normes de sécurité fixées par les constructeurs automobiles.

L'invention propose également un primaire ou composition de primage pour l'adhésion d'un polyuréthane sur le verre.

La composition de primage peut comprendre les composants de base pour former un polyuréthane à groupes OH libres, le composant polyol étant pris en excès, en terme d'équivalents par rapport au composant isocyanate, le rapport des groupes NCO aux groupes OH étant inférieur à 1, et de préférence compris entre 0,3 et 0,99.

Dans une variante, la composition de primage peut être une composition comprenant une résine époxyde à deux composants.

Dans une autre variante, la composition de primage peut être à base d'une résine polyoxasolidone obtenue par condensation d'un isocyanate sur une résine époxyde en excès, en présence d'un catalyseur de type sels d'ammonium quaternaire.

Le composant isocyanate peut être choisi parmi les isocyanates difonctionnels aliphatiques ou aromatiques tels que l'hexaméthylènediisocyanate, le 2,2,4-triméthyl -1,6-hexaméthylènediisocyanate, le bis (4-isocyanatocyclo hexyl)méthane,l'isocyanato 1, 3-isocyanatométhyl-3,5,5-triméthylcyclohexane (IPDI), le toluylène diisocyanate (TDI), les isocyanates de fonctionnalité supérieure à 2, tels les biurets d'isocyanate, les isocyanurates, le diisocyanatodiphényl-méthane partiellement polymérisé et de fonctionnalité comprise entre 2 et 3, etc...

Dans un mode préféré de l'invention, le composant isocyanate est un isocyanate aliphatique. De cette façon, on obtient une composition de primage moins sensible aux ultraviolets qu'avec un isocyanate aromatique. Ce type de composition qui est généralement colorée en noir pour la protéger des ultraviolets, peut dans ce cas ne plus être coloré.

Le composant polyol peut être formé d'au moins un polyol choisi parmi les polyols longs de masse moléculaire comprise entre 400 et 4000 environ tels que les polyétherdiols, polyesterdiols, polycaprolactonediols.

Avantageusement, le composant polyol comprend au moins un polyol long comme cité ci-dessus et au moins un diol de masse moléculaire inférieure, choisi parmi ceux utilisés généralement en tant qu'allongeur de chaîne dans la préparation des polyuréthanes : on peut citer par exemple les : éthylèneglycol,propanediol-1,2,propanediol-1,3,butanediol-1,2,-1,3,-1,4, diméthyl-2,2 propanediol-1,3 (néopentyl glycol), pentanediol-1,5,hexanediol-1,6, octanediol-1,8, décanediol, 1,10, dodécanediol-1,12,cyclohexanediméthanol, bisphénol A, méthyl-2-pentanediol- 2,4,méthyl-3 pentane diol-2,4, éthyl-2-hexanediol-1,3, triméthyl-2,2,4-pentane diol-1,3,diéthylèneglycol, triéthylèneglycol,tétraéthylène glycol,butyne-2-diol-1,4,butènediol-1,4 et décynediol substitués et/ou éthérifiés,hydroquinone-bis-hydroxyéthyléther, bisphénol A éthérifiés par deux ou quatre groupes d'oxyde de propylène, acide diméthylolpropionique.

Le composant polyol peut être formé encore d'un polyol de fonctionnalité supérieure à deux, tels des triols aliphatiques monomères comme le glycérol, le triméthylolpropane, des triols à chaînes polyéther, des triols de polycaprolactone, la masse moléculaire de ces triols étant généralement comprise entre 90 et 1000, des polyols mixtes polyéther/polyester de fonctionnalité supérieure à 2, par exemple de fonctionnalité comprise entre 2 et 3.

Le polyol de fonctionalité supérieure à 2 peut être utilisé seul, notamment lorsque sa masse moléculaire est supérieure à environ 400. Dans une variante, il peut être utilisé en mélange avec au moins un polyol long difonctionnel et/ou avec au moins un diol court.

Selon un autre mode de l'invention, le composant polyol peut comprendre au moins un copolymère de chlorure de polyvinyle (PVC) à groupements hydroxyles libres. Ce copolymère peut être utilisé seul ou en mélange avec un ou plusieurs polyols énumérés précédemment.

En tant que copolymère PVC à groupements hydroxyles, on peut utiliser des résines vinyliques présentant la structure générale suivante : 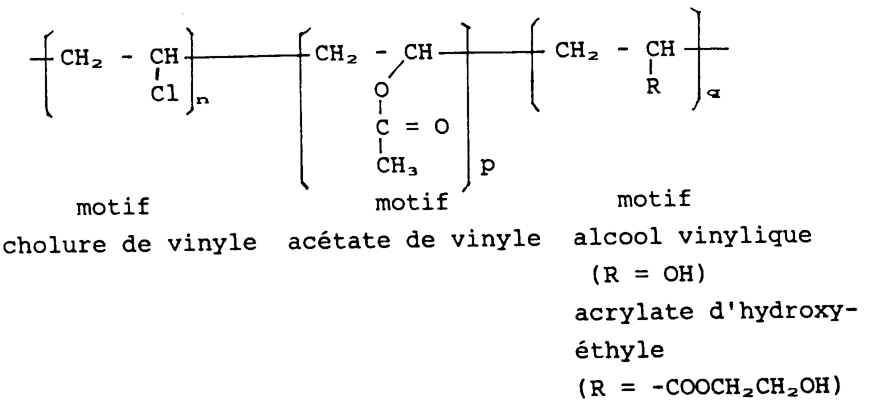 et des masses moléculaires comprises entre 1 000 et 100 000 environ et de préférence entre 2 000 et 50 000 environ, le motif chlorure de vinyle correspondant à environ 20 à 95 % en poids, le motif acétate de vinyle correspondant à environ 2 à 40 % en poids et le motif alcool vinylique ou acrylate d'hydroxyéthyle correspondant à environ 2 à 40 % en poids.

Dans une variante selon l'invention, la composition de primage contient en outre des silanes.

D'autres caractéristiques et avantages de l'invention apparaîtront dans la description suivante d'un exemple d'un vitrage et d'un traitement conformes à l'invention.

On fabrique un vitrage encapsulé possédant une surface émaillée sur sa périphérie pour véhicule automobile, par exemple un vitrage de custode, par le procédé de moulage par injection réactive (procédé connu sous l'appellation RIM), c'est-à-dire un procédé dans lequel la matière de surmoulage injectée est un mélange réactionnel qui réagit et durcit dans le moule. Le produit utilisé est par exemple un mélange de composants aptes à former un profil ou joint en polyuréthane.

Après séchage de quelques minutes à la température ambiante, on applique à l'aide d'un feutre une solution à base de silane sur la surface émaillée restant en bordure du joint d'encapsulation.

On applique ensuite, également à l'aide d'un feutre une composition préparée au préalable par un mélange d'un composant isocyanate : le méthylène diphényldiisocyanate partiellement polymérisé et présentant une fonctionnalité comprise entre 2 et 3 et d'un composant polyol comprenant du polypropylèneglycol de masse moléculaire 440 et du butanediol-1,4.

Les composants sont pris en quantités telles qu'à 0,8 équivalent d'isocyanate correspond 1 équivalent OH dont 0,3 équivalent apporté par le prolypropylèneglycol et 0,7 équivalent apporté par le butanediol-1,4.

Pour fabriquer cette composition réactionnelle, on mélange 32,7 g de polypropylèneglycol avec 15,3 g de butanediol-1,4. On ajoute de la méthyléthylcétone pour avoir une concentration finale en polyuréthane de 20 % environ. On ajoute au précédent mélange 0,3 g d'un catalyseur, par exemple du dilaurate de dibutylétain (DBTL). On ajoute ensuite 52 g de méthylènediphényldiisocyanate partiellement polymérisé.

Après étalement, on polymérise par un chauffage dans une enceinte à 120°C, qui procure une température de peau d'environ 85°C, durant 5 minutes environ.

Le vitrage encapsulé ainsi obtenu est apte à la pose par collage dans une baie de carrosserie. Cette aptitude au collage se conserve même après un long stockage du vitrage, par exemple de plusieurs mois.

Le cordon adhésif utilisé pour le collage peut être tout cordon adhésif, connu de l'homme du métier, utilisé pour le collage d'une bordure émaillée à la baie de carrosserie.

L'adhésion obtenue entre la surface émaillée et le cordon adhésif est solide et durable.

## Revendications

1. Procédé de traitement d'un vitrage, caractérisé en ce que l'on traite une partie de la surface du vitrage par au moins un silane et une composition susceptible de former une couche à groupes OH libres.

2. Procédé selon la revendication 1, caractérisé en ce que le vitrage est un vitrage encapsulé.

3. Procédé selon l'une des revendications 1 ou 2, caractérisé en ce que le vitrage possède une zone émaillée notamment en périphérie sur laquelle on effectue le traitement.

4. Procédé selon l'une des revendications 1 à 3, caractérisé en ce que l'on dépose une couche à base de silanes sur laquelle on dépose et on polymérise au moins partiellement une composition susceptible de former une couche à groupes OH libres.

5. Procédé selon l'une des revendications 1 à 3, caractérisé en ce qu'on dépose et on polymérise au moins partiellement une composition susceptible de former une couche à groupes OH libres, cette composition contenant des silanes.

6. Procédé selon l'une des revendications précédentes, caractérisé en ce que l'on polymérise la composition sur la zone émaillée en bordure du joint d'encapsulation.

7. Procédé selon l'une des revendications 4, 5, ou 6, caractérisé en ce que l'on polymérise la composition par un traitement thermique, à une température comprise entre 80 et 120°C pendant une durée comprise entre 1 et plusieurs minutes.

8. Procédé selon l'une des revendications 4, 5 ou 6, caractérisé en ce que l'on polymérise la composition à l'ambiante.

9. Vitrage, notamment vitrage encapsulé, possédant notamment une surface émaillée sur sa périphérie, destiné à être collé dans une baie d'un véhicule automobile, **caractérisé en ce qu**'il présente notamment sur sa surface émaillée une couche à groupes OH libres susceptibles de réagir ultérieurement avec un cordon adhésif **et en ce que** ladite couche comporte des silanes ou **en ce qu'**elle est superposée à une couche de silanes.

10. Composition de primage pour l'adhésion d'un polyuréthane sur le verre, caractérisée en ce que la composition comprend essentiellement au moins un silane et des composants susceptibles de former un polyuréthane à groupes OH libres, le composant polyol étant pris en excès par rapport au composant isocyanate, le rapport des groupes NCO aux groupes OH étant inférieur à 1.

11. Composition de primage selon la revendication 10, caractérisée en ce que le rapport des groupes NCO aux groupes OH est de préférence compris entre 0,3 et 0,99.

12. Composition de primage selon les revendications 10 ou 11, caractérisée en ce que le composant isocyanate est le méthylènediphényl-diisocyanate.

13. Composition de primage selon les revendications 10 ou 11, caractérisée en ce que le composant isocyanate est un isocyanate aliphatique.

14. Composition de primage selon les revendications 10, 11, 12 ou 13, caractérisée en ce que le composant polyol comprend un polyol de masse moléculaire comprise entre 400 et 4000 et un diol de masse moléculaire inférieure à celle du polyol.

15. Composition de primage selon l'une des revendications 10 à 14, caractérisée en ce que le composant polyol comprend un polyol de fonctionnalité supérieure à 2.

16. Composition de primage selon l'une des revendications 10 à 15, caractérisée en ce que le composant polyol comprend au moins un copolymère de chlorure de polyvinyle à groupements hydroxyles libres.

17. Composition de primage selon la revendication 16, caractérisée en ce que le copolymère PVC à groupements hydroxyles présente la formule suivante : 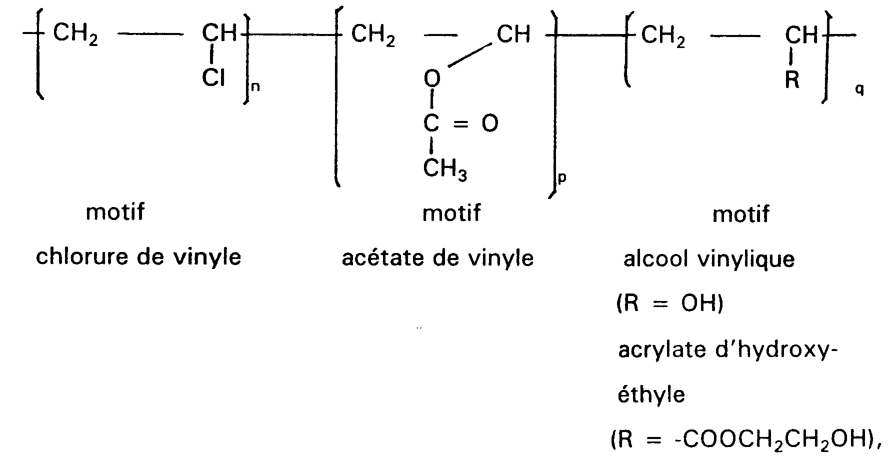 et une masse moléculaire comprise entre 1000 et 100 000 environ, et de préférence de 2000 à 50 000, le motif chlorure de vinyle correspondant à environ 20 à 95% en poids, le motif acétate de vinyle correspondant à environ 2 à 40% en poids et le motif alcool vinylique ou acrylate d'hydroxyéthyle correspondant à environ 2 à 40% en poids.

## Claims

1. Method of treating a glass, characterised in that part of the surface of the glass is treated by means of at least one silane and a composition able to form a coating with free OH groups.

2. Method according to Claim 1, characterised in that the glass is an encapsulated glass.

3. Method according to one of Claims 1 or 2, characterised in that the glass has an enamelled area notably at the periphery on which the treatment is effected.

4. Method according to one of Claims 1 to 3, characterised in that a coating based on silanes is deposited, on which a composition able to form a coating with free OH groups is deposited and at least partially polymerised.

5. Method according to one of Claims 1 to 3, characterised in that a composition able to form a coating with free OH groups is deposited and at least partially polymerised, this composition containing silanes.

6. Method according to one of the preceding claims, characterised in that the composition is polymerised on the enamelled area bordering the encapsulation joint.

7. Method according to one of Claims 4, 5 or 6, characterised in that the composition is polymerised by means of a heat treatment, at a temperature of between 80 and 120°C for a period of between one and several minutes.

8. Method according to one of Claims 4, 5 or 6, characterised in that the composition is polymerised at room temperature.

9. Glass, notably encapsulated glass, having notably a surface enamelled at its periphery, designed to be bonded in an opening in a motor vehicle, characterised in that it has notably on its enamelled surface a coating with free OH groups which are able to react subsequently with an adhesive bead and in that the said coating contains silanes or in that it is superimposed on a coating of silanes.

10. Priming composition for the adhesion of a polyurethane on the glass, characterised in that the composition comprises essentially at least one silane and components able to form a polyurethane with free OH groups, the polyol components being in excess with respect to the isocyanate component, the ratio of the NCO groups to the OH groups being less than 1.

11. Priming composition according to Claim 10, characterised in that the ratio of the NCO groups to the OH groups is preferably between 0.3 and 0.99.

12. Priming composition according to Claims 10 or 11, characterised in that the isocyanate component is methylenediphenyl diisocyanate.

13. Priming composition according to Claims 10 or 11, characterised in that the isocyanate component is an aliphatic isocyanate.

14. Priming composition according to Claims 10, 11, 12 or 13, characterised in that the polyol component comprises a polyol with a molecular weight of between 400 and 4000 and a diol with a molecular weight less than that of the polyol.

15. Priming composition according to one of Claims 10 to 14, characterised in that the polyol component comprises a polyol with a functionality greater than 2.

16. Priming composition according to one of Claims 10 to 15, characterised in that the polyol component comprises at least one polyvinylchloride copolymer with free hydroxyl groups.

17. Priming composition according to Claim 16, characterised in that the PVC copolymer with hydroxyl groups has the following formula: 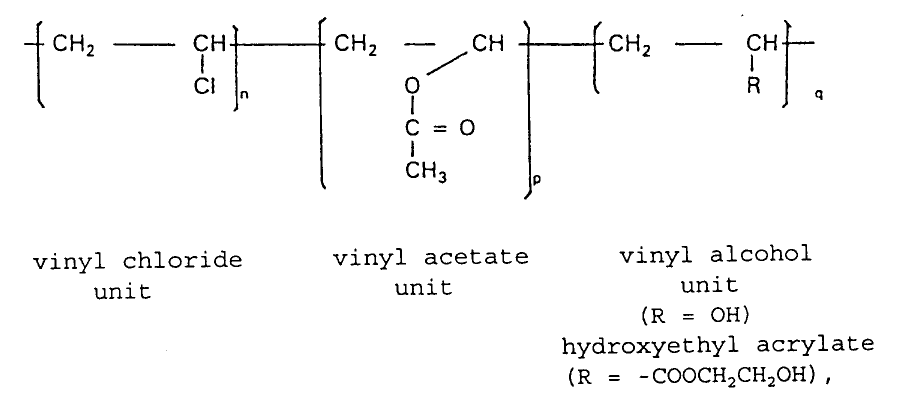 and a molecular weight of between 1000 and 100,000 approximately, and preferably 2000 to 50,000, the vinyl chloride unit corresponding to approximately 20 to 95% by weight, the vinyl acetate unit corresponding to approximately 2 to 40% by weight and the vinyl alcohol or hydroxyethyl acrylate unit corresponding to approximately 2 to 40% by weight.

## Patentansprüche

1. Verfahren zur Behandlung einer Verglasung, **dadurch gekennzeichnet, daß** ein Teil der Oberfläche der Verglasung durch mindestens ein Silan und eine Zusammensetzung, die in der Lage ist, eine Schicht mit freien OH-Gruppen zu bilden, behandelt wird.

2. Verfahren nach Anspruch 1, **dadurch gekennzeichnet, daß** die Verglasung eine ummantelte Verglasung ist.

3. Verfahren nach Anspruch 1 oder 2, **dadurch gekennzeichnet, daß** die Verglasung insbesondere am Umfang einen emaillierten Bereich besitzt, auf welchem die Behandlung durchgeführt wird.

4. Verfahren nach einem der Ansprüche 1 bis 3, **dadurch gekennzeichnet, daß** man eine Schicht auf der Grundlage von Silanen aufbringt, auf welcher eine Zusammensetzung aufgebracht und wenigstens teilweise polymerisiert wird, die in der Lage ist, eine Schicht mit freien OH-Gruppen zu bilden.

5. Verfahren nach einem der Ansprüche 1 bis 3, **dadurch gekennzeichnet, daß** eine Silane enthaltende Zusammensetzung aufgebracht und wenigstens teilweise polymerisiert wird, die in der Lage ist, eine Schicht mit freien OH-Gruppen zu bilden.

6. Verfahren nach einem der vorhergehenden Ansprüche, **dadurch gekennzeichnet, daß** die Zusammensetzung auf dem emaillierten Bereich in unmittelbarer Nähe der Ummantelungsdichtung polymerisiert wird.

7. Verfahren nach einem der Ansprüche 4, 5 oder 6, **dadurch gekennzeichnet, daß** die Zusammensetzung durch eine 1 bis mehrere Minuten dauernde Wärmebehandlung bei 80 bis 120 °C polymerisiert wird.

8. Verfahren nach einem der Ansprüche 4, 5 oder 6, **dadurch gekennzeichnet, daß** die Zusammensetzung bei Umgebungsbedingungen polymerisiert wird.

9. Verglasung, insbesondere eine ummantelte, welche speziell an ihrem Umfang eine emaillierte Oberfläche besitzt und in eine Öffnung eines Kraftfahrzeugs eingeklebt werden soll, **dadurch gekennzeichnet, daß** sie insbesondere auf ihrer emaillierten Oberfläche eine Schicht mit freien OH-Gruppen aufweist, die in der Lage sind, später mit einem Klebeband zu reagieren, **und** die Schicht Silane enthält oder **daß** sie mit einer Schicht von Silanen bedeckt ist.

10. Haftvermittlungszusammensetzung zum Kleben eines Polyurethans auf das Glas, **dadurch gekennzeichnet, daß** die Zusammensetzung im wesentlichen mindestens ein Silan und Komponenten umfaßt, die in der Lage sind, ein Polyurethan mit freien OH-Gruppen zu bilden, wobei die Polyolkomponente in bezug auf die Isocyanatkomponente im Überschuß vorliegt und das Verhältnis der NCO-Gruppen zu den OH-Gruppen kleiner als 1 ist.

11. Haftvermittlungszusammensetzung nach Anspruch 10, **dadurch gekennzeichnet, daß** das Verhältnis der NCO-Gruppen zu den OH-Gruppen vorzugsweise 0,3 bis 0,99 beträgt.

12. Haftvermittlungszusammensetzung nach Anspruch 10 oder 11, **dadurch gekennzeichnet, daß** die Isocyanatkomponente Methylendiphenyldiisocyanat ist.

13. Haftvermittlungszusammensetzung nach Anspruch 10 oder 11, d**adurch gekennzeichnet, daß** die Isocyanatkomponente ein aliphatisches Isocyanat ist.

14. Haftvermittlungszusammensetzung nach den Ansprüchen 10, 11, 12 oder 13, **dadurch gekennzeichnet, daß** die Polyolkomponente ein Polyol mit einer Molmasse von 400 bis 4 000 und ein Diol mit einer Molmasse enthält, die niedriger als die des Polyols ist.

15. Haftvermittlungszusammensetzung nach einem der Ansprüche 10 bis 14, **dadurch gekennzeichnet, daß** die Polyolkomponente ein Polyol mit einer Funktionalität von größer als 2 enthält.

16. Haftvermittlungszusammensetzung nach einem der Ansprüche 10 bis 15, **dadurch gekennzeichnet, daß** die Polyolkomponente mindestens ein Polyvinylchlorid-Copolymer mit freien Hydroxylgruppen enthält.

17. Haftvermittlungszusammensetzung nach Anspruch 16, **dadurch gekennzeichnet, daß** das PVC-Copolymer mit Hydroxylgruppen folgende Formel 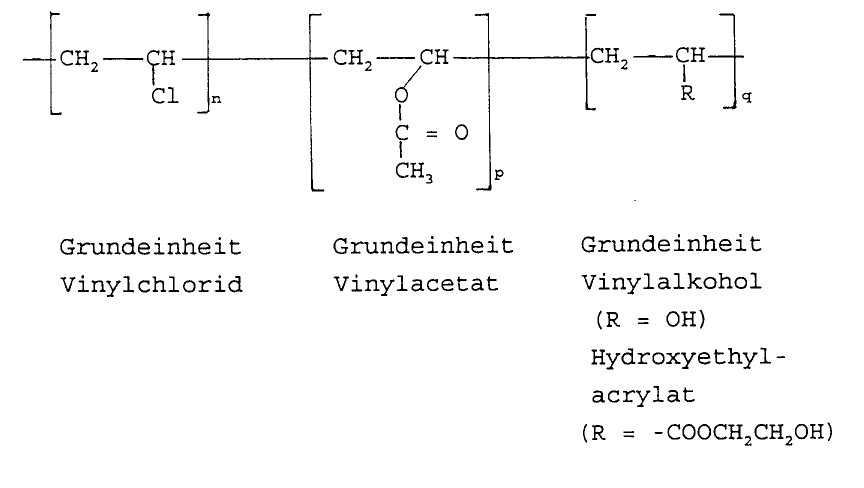 und eine Molmasse von etwa 1 000 bis 100 000 und vorzugsweise von 2 000 bis 50 000 besitzt, wobei die Vinylchlorid-Grundeinheit etwa 20 bis 95 Gew.-%, die Vinylacetat-Grundeinheit etwa 2 bis 40 Gew.-% und die Vinylalkohol- oder Hydroxyethylacrylat-Grundeinheit etwa 2 bis 40 Gew.-% entspricht.
